# EUROPEAN PATENT APPLICATION

(11) **EP 4 606 549 A1**
(43) Date of publication of application: **27.08.2025**
(21) Application number: 24159561.0
(22) Date of filing: 26.02.2024
(51) Int. Cl.: B29C 45/26, B60Q 1/06, F21S 41/60, F21W 102/13, B29C 45/17, B29C 45/37, B29L 11/00, B29L 31/30, B29L 31/00

(54) **MOULD FOR INJECTION MOULDING OF AN OPTICAL ELEMENT FOR A HEADLIGHT AND METHOD FOR FORMING SUCH AN ELEMENT**

(71) Applicant: Hella Autotechnik Nova s.r.o., 78985 Mohelnice (CZ)
(72) Inventor: Avrat, Filip, 78985 Mohelnice (CZ); Bartos, Martin, 78972 Dubicko (CZ); Fabian, Robert, 78701 Sumperk (CZ)
(74) Representative: Behr-Wenning, Gregor

(57) **Abstract**

Mould (1) and method for injection moulding of an optical element (2) for a headlight, especially for low beam light. The mould (1) has a cavity (4) for forming the optical element (2) which comprises a shade-forming section (5) for moulding a cut-off line shade (6). The mould (1) comprises an insert (7) for limiting the shade-forming section (5) according to a required cut-off line shape, wherein the insert (7) is at least partially insertable into the shade-forming section (5).

## Description

### Technical field

The present invention relates to manufacturing of headlights, specifically to manufacturing optical elements for low-beam illumination functions, where the element comprises a cut-off line shade.

### Background of the Invention

Automobile headlights generally comprise multiple illumination modules for performing various illumination functions. These modules usually include a high beam module, which a driver can use to illuminate the road far ahead when there is no traffic in front of the driver in either lane, and a low beam module (also called dipped or passing beam module), which drivers use when there is other traffic in front of them. The low beam module can provide an asymmetrical light beam, which shines further ahead in the driver's own lane than in the opposite lane, i.e., the light falls farther ahead in the right lane than in the left lane in right-hand traffic.

A known way of providing this asymmetrical beam is to provide a shading element in front of the low beam's light source, lens or reflector. The shading element blocks a part of the light beam produced by the light source so there is a shaded area on the road corresponding to the shape and position of the shading element. The element is said to provide a cut-off line or asymmetrical cut-off line, i.e., the boundary between illuminated and shaded area is closer to the vehicle on one side of the road than on the other. An example of headlight with such a low beam module is disclosed in document JP2003168307A, where a movable shade is used to define the low beam pattern.

Using a separate shade component to block a part of the light in order to create a desired cut-off line in the low-beam light pattern naturally complicates manufacture of the headlight. The shade needs to be created and then individually mounted into the headlight. This complication can be partially removed by forming the shade as a part of some other component of the headlight, e.g., a part of a reflector, lens, lens holder etc. For example, a reflector can be injection-moulded and the shade in front of the reflector can be moulded at the same time.

A problem with this approach is that there are many different types and shapes of commonly used cut-off lines. For example, a different cut-off line is needed for right-hand traffic than for left-hand traffic, different countries can have different legal requirements on cut-off line shape and size, different vehicle models or different lamp constructions can also require different cut-off line shades etc. With the shade being moulded together with the other component, a different mould for this component is necessary for each different type of cut-off line. Since moulds are generally quite expensive to produce, this approach to providing cut-off line shades can be fairly expensive for lamp-manufacturers who provide large number of lamp-types intended for different vehicles or different countries.

It would therefore be desirable to provide a way of creating optical elements for headlights which would include a cut-off line shade but would not be as complicated and/or expensive as the approaches known from the state of the art.

### Summary of the Invention

The shortcomings of the solutions known in the prior art are to some extent eliminated by a mould for injection moulding of an optical element for a headlight. The mould comprises at least two mutually movable mould parts which together delimit a cavity for forming the optical element. The cavity has the shape of the element to be made, and movement of the mould parts enables the formed optical element to be removed from the mould. The cavity comprises a shade-forming section for moulding a cut-off line shade on the optical element. The mould further comprises at least one exchangeable insert for limiting the shade-forming section according to a required cut-off line shape, wherein the insert is at least partially insertable into the shade-forming section.

The shade-forming section thus delimits a negative shape of the shade, i.e., it has a hollow space which can be filed with material to form the shade. The insert adjusts the shape of the shade-forming section, e.g., it forms one side of it, especially a side which corresponds to a free end-portion of the shade. For example, without the insert the shade-forming section can be substantially cuboid-shaped. The insert fills a part of the cuboid to leave a hollow section corresponding to a desired shape and size of a cut-off line shade. A common shape of a cut-off line shade which can be used in the present invention has three sections arranged next to each other from left to right (or right to left depending on whether the element is intended for left-hand traffic or right-hand traffic) - a higher substantially flat section, inclined connection section, and a lower substantially flat section. The higher section blocks more light and thus provides the required shade for oncoming traffic and the inclined section forms a transition area between the part of the road illuminated farther ahead and the part of the road illuminated less far ahead.

The shade forms a shaded spot in front of the vehicle equipped with a headlight comprising the formed optical element. The boundary between the shaded and the illuminated portion on the road is the cut-off line. Cut-off lines are a common feature of low-beam lights, especially for ensuring that a headlight does not blind oncoming traffic while sufficiently illuminating corresponding side of the road.

The mould can be for example form steel and can have more parts than just two. It can also have multiple cavities for forming multiple optical elements at once. Each such cavity can have its own insert. It is also possible to have a multi-part insert for multiple such cavities, i.e., inserts for all cavities can be connected such that they are inserted, positioned and, if needed, attached to the rest of the mould all at once. The multiple elements can all have the same shape and can be connected by a branched piece of the moulding material which is then removed in post-processing of the moulded elements.

The insert can be shaped such that a part of it fits snuggly into the shade-forming section of the cavity so that its precise position is defined by the cavity itself. It can also comprise an attachment for connecting the insert to other part of the mould or guide elements for precise positioning inside of the mould. The attachment can for example be a protrusion with a through hole. A screw can be passed through the hole into one of the mould parts to fix the insert at place. The guide elements can e.g. be a groove on a mould part for protrusion of the insert.

The shape of the insert, especially of its parts which define the shape of the shade, can be influenced by many factors - legal or aesthetical requirements on the cut-off line, shape and/or arrangement of other lamp components (lens, reflectors, light sources etc.), position of the shade on the resulting optical element, type of the light sources which are to be used with the element, etc. For example, a computer modelling software for lamp manufacturers can be used, e.g., it can be inputted with a required beam pattern (which includes the cut-off line shape) and can produce a shape of the shade (and thus of the shade-forming cavity and the insert) as well as shape of other components such as lens or reflector.

Apart from the shade-forming section, the cavity can comprise one or more further sections for creating other parts of the optical elements, e.g., its body (structural part which does not have to serve an optical function), a lens holder, a lens, a reflector holder, a reflector, a PCB holder, a light source holder, etc. Generally, the shade-forming section can thus be complemented by an optical part-forming section (for lens, reflector etc.) and/or a structural part-forming section (for holders for other components, for connecting other parts of the element and/or for attaching the optical element to other lamp parts such as a frame).

The exchangeable insert, which defines at least a part of the cut-off line shade's shape, makes it possible to use the same mould for creating many different shapes of cut-off line shades. The same optical element can thus be made with the same mould even if a different cut-off line is needed - only the insert needs to be changed. Different cut-off lines are often required for different countries, typically for markets with left-hand traffic. Lamp manufacturers thus have to produce different optical elements for their lamps, which require a whole different mould in the state of the art, if a cut-off line shade is formed together with an optical element. Since moulds are very expensive, the present invention can save significant amounts of money for lamp manufacturers.

Storing multiple inserts also requires much less space than storing multiple moulds, so storage space is also saved. Changing an insert is also much easier than changing the whole mould and setting it up for an injection moulding process, so adjusting a production line for making optical elements with different shades can be much faster with the present invention. It is also much easier to form a new type of insert than a whole new mould so preparing a production line for moulding optical elements with a new type of shade can also be much faster and cheaper.

The same insert(s) can also be used for different moulds, e.g., if differently shaped optical elements have the same shape of cut-off line shades, their respective moulds can use the same inserts. This can further save costs for lamp manufacturers, especially if they need to be prepared to make many different types of elements with different types of shades.

The mould can comprise a total of at least two exchangeable inserts for limiting the shade-forming section, wherein each of the inserts is at least partially insertable into the shade-forming section. Each insert then preferably has a different shape for moulding a differently shaped cut-off line shade. It is possible to insert multiple inserts at once to delimit the shade-forming section as needed. Preferably however, one insert is used at a time and the other insert(s) can be used when a different shade shape is required.

The cavity of the mould can further comprise a reflector-forming section. This section is connected (directly or via another section of the cavity) to the shade-forming section and forms a reflector during moulding process. A reflector can e.g., have a spherical or parabolical shape.

The cavity of the mould can further comprise a PCB holder-forming section. This section is connected (directly or via another section of the cavity) to the shade-forming section and forms a PCB holder during moulding process. The holder can e.g., be a block of material to which a PCB can be screwed, glued or otherwise attached. It can also be a recess in a block of material into which an edge of a PCB can be inserted.

The cavity of the mould can further comprise a lens-forming section. This section is connected (directly or via another section of the cavity) to the shade-forming section and forms a lens during moulding process. The lens can have any known shape, e.g., spherical, freeform, Fresnel, convex, concave etc., and the cavity is then shaped accordingly.

The cavity of the mould can further comprise a lens holder-forming section. This section is connected (directly or via another section of the cavity) to the shade-forming section and forms a lens holder during moulding process. The holder can e.g., be a recess in a block of material into which an edge of a lens can be inserted, it can be a surface for attaching the lens by gluing etc.

Different parts of the resulting optical element (e.g., various holders and optical components described above) can require different post-processing. E.g., if the element is made from clear material, such as PMMA or polycarbonate, the shade can then be coated with a reflective or light-absorbing coating. Lens part can be polished, reflector part can be polished and/or provided with reflective coating etc. Any or all of the above-mentioned cavity sections can be included in the mould, e.g., lens and reflector can be combined, lens holder and reflector holder can be combined, PCB holder can be combined with reflector and/or lens, etc.

The shortcomings of the technical solutions known in the prior art are to some extent also eliminated by a method for forming an optical element for a headlight using a mould. Especially, the mould according to the invention can advantageously be used for this method. The method comprises the following steps.
- Obtaining a mould insert having a shape corresponding to a required cut-off line shape. This step can e.g. be a selection, by a skilled person or an operator of the moulding process, of an appropriate insert from a set of inserts. The set can be a standard equipment of given facility, e.g., the inserts can be prepared beforehand for any shade shapes needed in the facility and new inserts can be added whenever needed. Technical documentation corresponding to an optical element to be made, to a whole lamp etc., can be a source of parameters considered when choosing the right insert. A specific insert can also be already chosen by designer of the optical element, and during this method, the insert is merely taken from the set of inserts.

The mould itself, shaped for forming the desired optical element and able to receive the insert, can also be obtained in this step. Preferably, the mould is obtained and ready to use before the method is started.
- Inserting the selected insert, at least partially, into a shade-forming section of a cavity for forming the optical element of the mould. In this step, the shade-forming section is thus limited by the insert to define a negative shape of the desired cut-off line shade. The insert can be fully located in the shade-forming section, or it can extend out of it, e.g., by its attachment with hole for screw. The insert can extend out of the mould and/or it can also partially extend into the rest of the cavity.
- Filling the cavity of the mould, at least partially, with molten material, wherein a part the material is shaped by the insert, e.g., the material comes into contact with one or more sides of the insert. The material can especially be plastic, but it is also possible to use other materials, e.g., glass or metals. The material can be injected under pressure to help fill the whole cavity. This step can be done in the same way as for standard injection moulding. A choice of material, pressure, temperature, and other factors can thus be readily made by a skilled person.
- Removing the material from the mould after cooling. Cooling can be passive, e.g., simply done by waiting. Active cooling, e.g., by providing coolant passages into the mould, can be advantageous because it speeds up the cooling and the mould can then be used for another moulding sooner. The mould is then opened, by moving at least one of the mould parts, and the moulded element can be removed. The insert can be also removed before removing the element, but in some variants of the invention can stay in the mould between making further elements.

The method provides analogous advantages over the state of the art as described above for the mould according to the invention.

The step of obtaining the mould insert can comprise selecting the mould insert from a plurality of inserts which have different shapes for forming differently shaped cut-off line shades. As described above, this selection can be done according to an assessment of a skilled person, can be done according to technical documentation etc.

The step of obtaining the mould insert can also comprise forming the mould insert according to a requirement for a cut-off line shape, e.g., as described in more detail above. For example, the insert can be formed by machining, casting etc.

### Description of drawings

A summary of the invention is further described by means of exemplary embodiments thereof, which are described with reference to the accompanying drawings, in which:
- Fig 1.: Shows a schematic sectional side view of a mould according to a first embodiment of the present invention, wherein the mould has two mould parts and an insert which together shape injected plastic material into a reflector with a shade for creating a cut-off line.
- Fig 2.: Shows the mould from fig. 1 before the material is injected.
- Fig 3.: Shows a schematic sectional side view of a part of a headlight with an optical element formed by the mould from figs. 1 and 2, wherein the optical element carries a PCB with an LED which provides light to the reflector, and part of the light is blocked by the shade.
- Fig 4.: Shows schematical front drawings of three exemplary shapes for a cut-off line shade.
- Fig 5.: Shows a schematic sectional side view of a mould according to a second embodiment of the present invention, where the resulting optical element comprises a lens instead of a reflector.
- Fig 6.: Shows a side view of an optical element formed by the mould from fig. 5.
- Fig 7.: Shows a side view of a part of a headlight which comprises the optical element from fig. 6.
- Fig 8.: Shows a perspective sectional side view of a headlight with an optical element made by a third exemplary embodiment of the invention. This embodiment is similar to the first embodiment - the optical element comprises a reflector and also serves for holding a horizontal PCB with an LED.
- Fig 9.: Shows a perspective front view of the headlight part from fig. 8. An asymmetrical shape of the cut-off line shade is visible in this figure.
- Fig 10.: Shows a flowchart describing steps of a method for forming an optical element for a headlight using a mould according to another embodiment of the invention.

### Exemplary Embodiments of the Invention

The invention will be further described by means of exemplary embodiments with reference to the respective drawings.

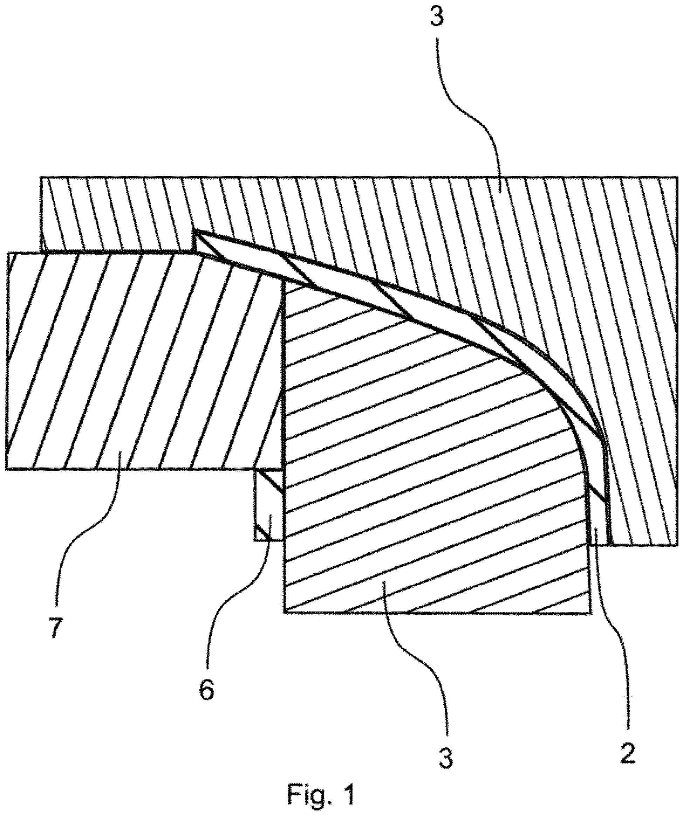

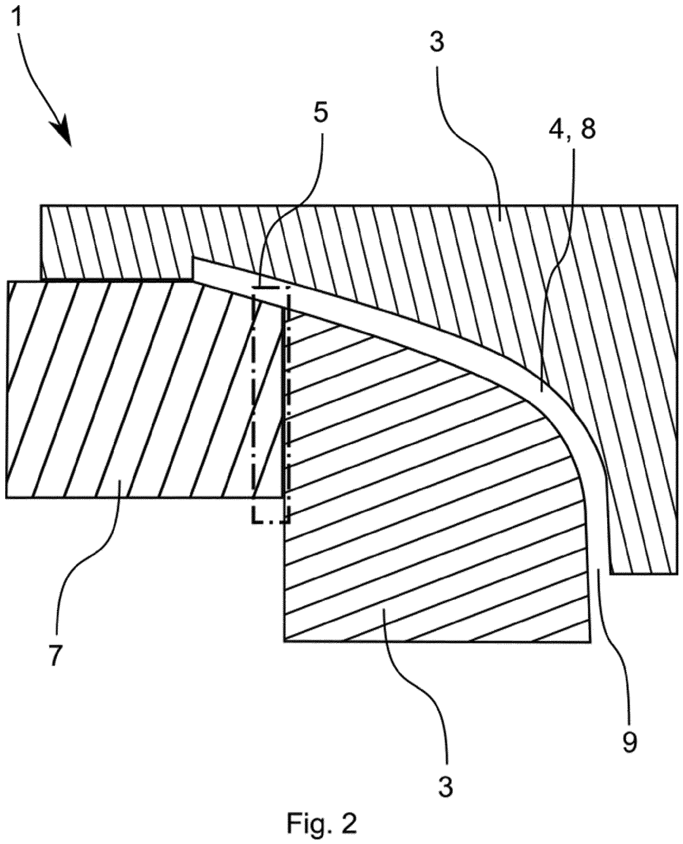

A first embodiment of the mould 1 for injection moulding of an optical element 2 for a headlight of an automobile is shown in figs. 1 and 2. The mould 1 comprises two mould parts 3 - a main part which remains static during moulding process (upper part in fig. 1) and a second part which is moved during opening of the mould 1. The movement is downwards in the first embodiment. The mould **1** is made from steel and is intended for moulding the optical element **2** from a plastic material such as PMMA.

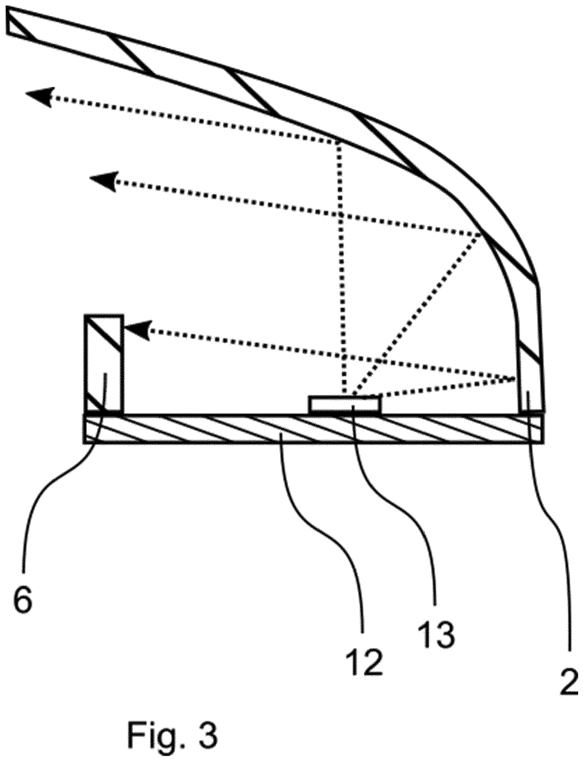

The mould **1** further comprises an insert **7,** which in this embodiment is attachable to the main mould **part 3.** The mould **1** delimits a cavity **4** which has the same shape as the resulting optical element **2,** which in this embodiment comprises a reflector **17,** a PCB **12** holder 14 at the bottom of the reflector **17,** a shade **6** for creating a cut-off line in an outputted light beam and a body of the element (not shown in the cross-sections from figs. 1-3) connecting the shade **6** to the reflector **17.** The cavity 4 thus has corresponding sections (see fig. 2) - shade-forming section **5,** reflector-forming **section 8,** PCB **12** holder-forming section **9** and a body-forming section (not shown).

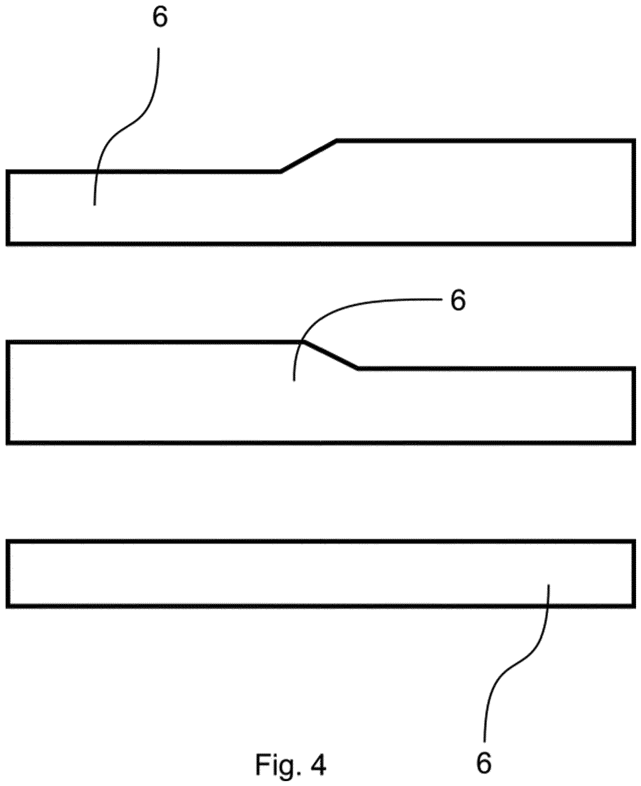

The shade-forming section **5** is partially filled by the insert **7.** In this embodiment, the upper part of the shade-forming section **5** is filled by the insert **7** and the lower part remains empty to be filed by the plastic material. The insert **7** thus defines the height of the shade **6** as well as the shape of its upper surface. In this embodiment, the shade **6,** when viewed from the front, i.e. from the place in front of an automobile with the moulded optical element 2 implemented in its headlight, has a shape as depicted in the middle drawing from fig. 4. The shade **6** thus has a higher left section and lower right section, with an inclined middle section in between. A lens **16** used in the resulting headlight directs the light such that the right side of the road is then illuminated farther ahead than the left side of the road, which is needed for low-beam light for right-hand traffic.

The insert **7** shown in the figures is only one of multiple inserts **7** which are a part of this embodiment. Each of the inserts **7** can be placed to the main mould part **3** in the same way and can limit the shade-forming section **5** to a different shape for forming a different shade **6.** One of the inserts **7** has a flat bottom part and would result in the shade **6** from the bottom drawing of fig. 4. Other insert **7** differs from the one from figs. 1 a 2 in that it is symmetrically inverted around a vertical axis such that it results in element suitable for left-hand traffic. It is apparent that further inserts **7** can be added by a skilled person as needed for a particular application.

The cavity **4** of the mould **1** is closed such that it can be filled with the molten plastic material and comprises coolant passages and an input passage for injecting the material (not shown in the schematic drawings from figs. 1 and 2). The insert **7** is connected to the main mould part **3** by an attachment comprising a lug for screwing the insert **7** to the main part.

The optical element 2 made by the mould 1 described above thus serves as a reflector 17, PCB 12 holder 14 and cut-off line shade 6. The functional surface of the reflector 17 is provided with reflective coating, as well as the back side of the shade 6. The element is then used as a part of a low-beam module which further comprises the PCB 12 with an LED 13 light source fixed from below to the optical element **2.** The element defines an opening on its bottom which is closed by the PCB **12** and allows the LED 13 to illuminate the reflector 17. The module further comprises projection lens 16 and casing, as is usual for illumination modules.

The low beam module can then be a part of an automobile headlight, which comprises further modules (high-beam module, turn signal, daytime running lights etc.), cover lens and casing, actuators, wiring, sensors etc. The optical element 2 made by the mould 1 according to any embodiment of the invention can be used by skilled persons in the same way as optical elements made by moulds from the state of the art.

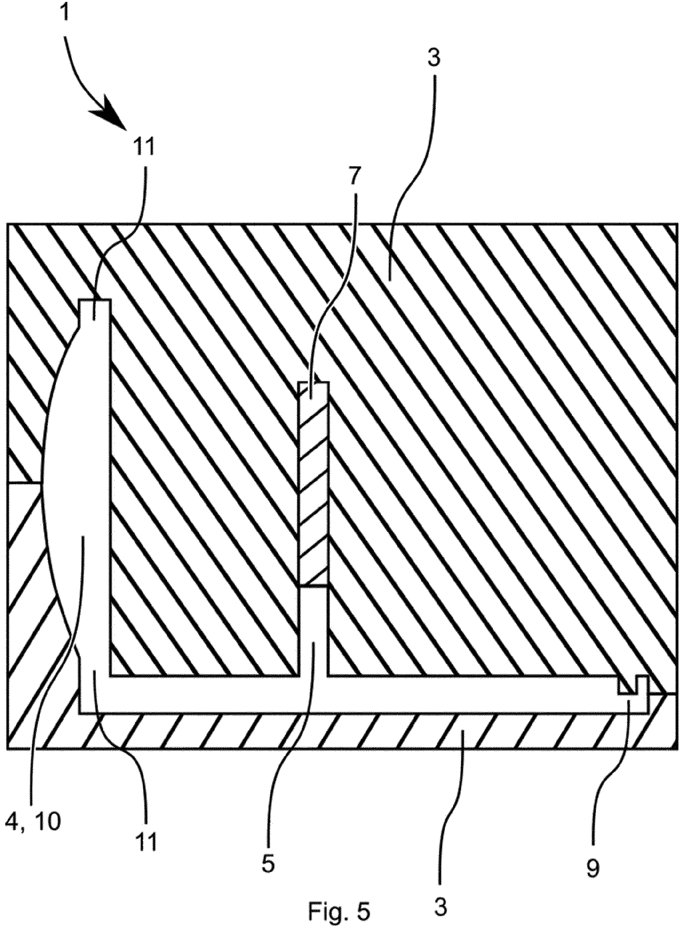

A second exemplary embodiment of the mould 1 is shown in fig. 5. The main parts of the mould 1 and its use and use of the resulting optical element 2 are analogous to the above-described first embodiment. The mould 1 has two mould parts **3** which together delimit a closed cavity 4 for forming an optical element 2 for low-beam illumination function. The cavity 4 has a lens-forming section 10, upper and lower lens 16 holder-forming sections 11, a shade-forming section 5, a PCB 12 holder-forming section 9 and a body-forming section which connects the other sections (see fig. 5 where the body-forming section is the bottom of the cavity 4).

The lens-forming section 10 is shaped to form a lens 16 with spherical front side and flat back side. The lens 16 holder-forming sections 11 are adjacent to the lens-forming section 10 - the resulting lens 16 holders 15 are thus connected to the lens 16 by being from the same piece of material and can then be used to precisely position and fix the lens 16 (and fix the whole optical element 2) to a lamp-module frame, e.g., by screwing. The PCB 12 holder-forming section 9 creates a groove in the body of the element and a PCB 12 can be inserted in the groove and fixed therein, e.g. by gluing.

The shade-forming section 5 has a constant thickness and a height which is limited by an insert 7 according to design requirements for a cut-off line shade 6. The insert 7 is placed in the shade-forming section 5 and its bottom surface defines the upper surface of the shade 6, which in this embodiment is as depicted in the middle drawing from fig. 4.

It is apparent from fig. 5 that changing the insert 7 will change the shade 6 shape. E.g., a lower insert 7 will result in higher shade 6 and vice versa. The rest of the mould 1 can stay the same for any desired shade 6. At the same time, the inserts 7 intendent for this mould 1 can be used for a different mould 1, e.g., having similar shape with differently designed lens 16.

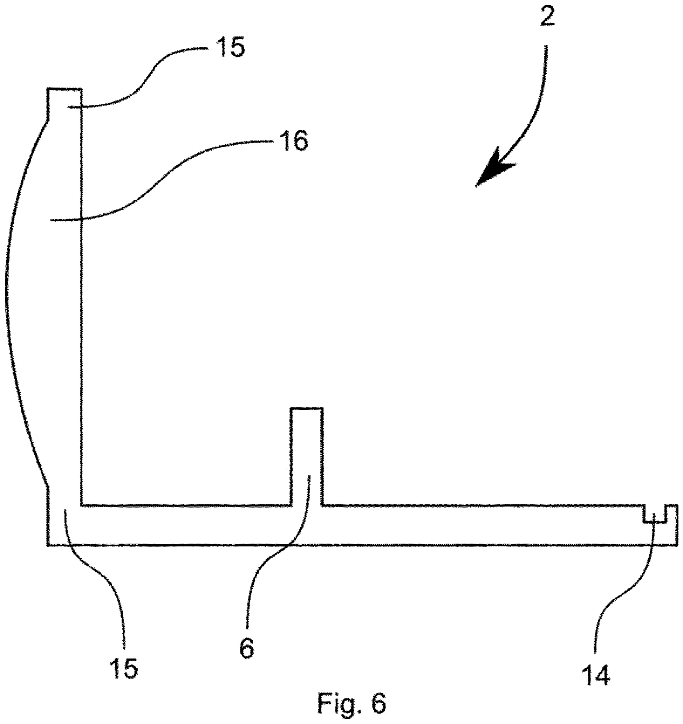

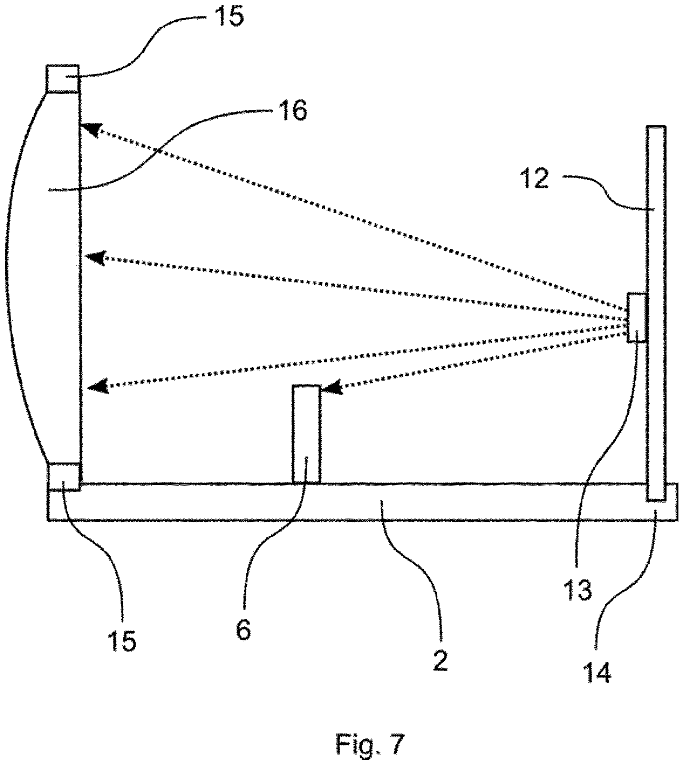

The resulting optical element 2 made by this mould is shown in figs. 6 and 7. Since the lens 16 is a part of the element, the moulding material is a clear plastic, and the shade 6 and lens 16 holders 15 are thus painted by a black paint. A PCB 12 with an LED **13** can then be placed in the PCB 12 holder 14 and the element can be assembled into a low-beam module for a headlight.

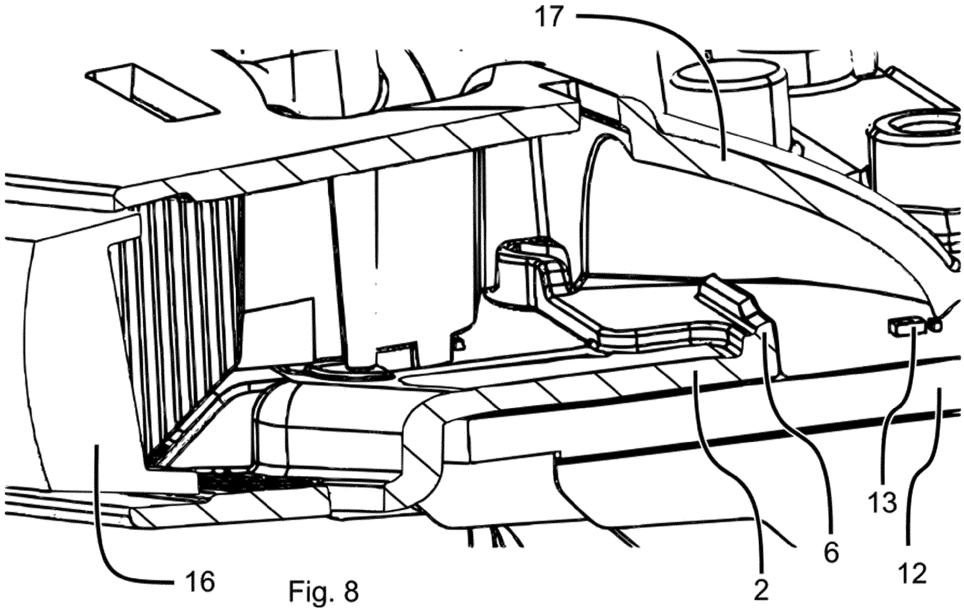

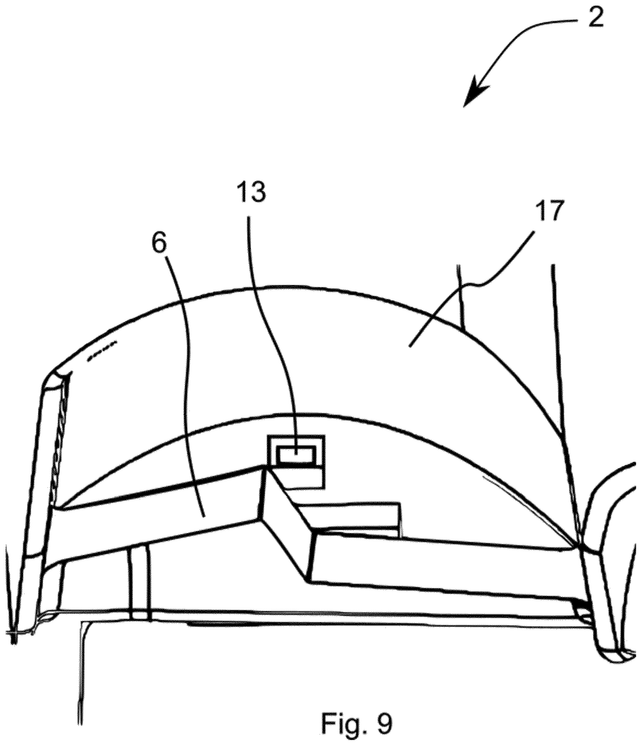

In a third embodiment, the mould 1 has a shape similar to that of the first embodiment, except that it is more complex, as can be seen in fig. 8 showing the optical element 2 made by this mould 1. The mould 1 in the third embodiment comprises a cavity 4 having a shade-forming section 5, reflector-forming section 8, PCB 12 holder-forming section 9 and a body-forming section. One mould part **3** delimits the element from above, other mould part 3 delimits the element from below and the insert 7 delimits the element, including the cut-off line shade 6, from the front. Fig. 8 also shows a lens 16 attached to the optical element 2 and an LED 13 on a PCB 12 attached to the element from below, in the same way as described in the first embodiment. Fig. 9 then shows a view from the front of this embodiment where the shape of the shade 6 can be seen.

Another embodiment of the present invention is a method for forming an optical element 2 for a headlight using a mould 1. The mould 1 according to the invention, e.g., in any of the above-described embodiments, can be used in this method. In a fourth embodiment of the invention, this method comprises the following steps:
- Design of a headlight and its optical element 2. This step can be considered a preparation phase for the method, it can be done a long time in advance by a different people than the rest of the method. It however directly impacts the subsequent steps so in this embodiment, it is considered a part of the method. The headlight design can be done analogously to headlights known from the state of the art. For this method, the most significant part of the design is determining a shape of a cut-off line shade 6 for low beam function of the headlight. In this embodiment, the optical element 2 with the shade 6 is designed to be as depicted in figs. 5 to 7. A material for the optical element 2 can be chosen in this step.
- Design of a mould 1 for the optical element 2 and its insert 7. This step is directly influenced by the previous one. The mould 1 is made such that it defines a cavity 4 corresponding to the desired optical element 2 (see fig. 5). The insert 7 has a shape corresponding to the shade-forming section 5 of the cavity 1 and to the designed shade 6 shape. The mould 1 is then manufactured according to this design, and so is one or more suitable inserts 7. Making multiple inserts 7 with different shapes beforehand is advantageous because it is then easy to modify the method by merely changing an insert 7 in order to start producing different optical elements 2 with different shade 6.
- The appropriate insert 7 is then inserted into the mould 1 and the mould 1 is then closed and used in a standard way for injection moulding, i.e., it is filled by a molten plastic, which is then cooled, and the created workpiece is removed from the mould 1. The mould 1 can then be used for making further elements, without changing the insert 7 until a different shade 6 shape is needed.
- Post-processing including removing unwanted pieces of the moulding material, polishing the lens 16 formed as a part of the element and coating the shade 6 and lens 16 holders 15. This step can be done as known in the state of the art.

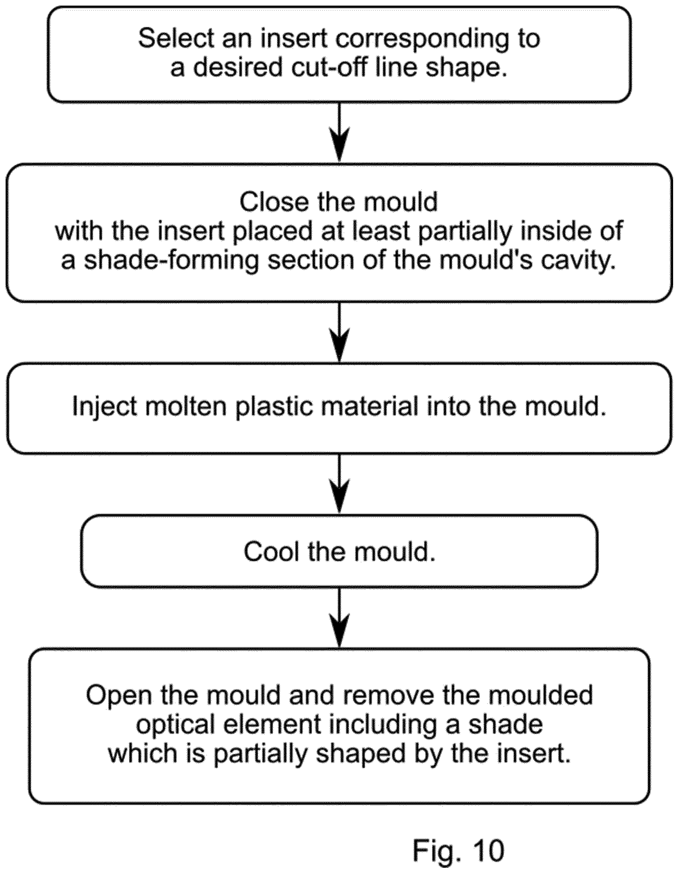

An optical element 2 is thus created, and the element can be mounted into a headlight module. For cost-saving reasons, it is advantageous if the mould 1 has multiple cavities 1 for making multiple elements at once. Each cavity 4 has its insert 7 and functions in the same way as described above. The main steps of this exemplary method are described by the flowchart in fig. 10.

Instead of designing and forming the insert 7 as a part of the method, it can be merely selected from a plurality of pre-prepared inserts 7, e.g., available in the production facility where the method occurs. The inserts 7 are still designed according to requirements for cut-off line shades 6, as is the mould 1 itself, but these steps can be separated from the present method.

In another embodiment of the method, a first step is selecting a suitable insert 7 from the three inserts **7** of the mould 1 in the first embodiment. The insert **7** is chosen based on whether the optical element 2 is intended for right-hand traffic or left-hand traffic or whether it should produce a symmetrical cut-off line. The selected insert 7 is then inserted to the mould 1 and screwed to the main mould part 3. After that, the mould 1 is closed and a standard injection moulding process follows - the cavity 4 is filled with the material, which is then cooled. The mould 1 is then opened, the insert 7 is removed and the moulded workpiece is taken out of the mould 1.

Further adaptations and modifications of the embodiments described above may be accomplished by one of ordinary skill in the art without departing from the scope of the present invention.

For example, in another embodiment of the mould 1, the mould 1 differs from the second embodiment in that it also comprises a reflector-forming section 8 located behind the shade-forming section 5. The body then comprises an opening and the PCB 12 is placed from below similarly to the first embodiment. The mould 1 is shaped accordingly.

Shapes and sizes of the mould 1, the inserts 7, the cavity 4 section etc., as well as the number of inserts 7 provided with a mould 1, can be different in other embodiments. Skilled persons can readily create moulds 1 and inserts 7 shaped according to their individual requirements (dictated e.g., by customers, by laws, by arrangement of neighbouring components etc.).

### Reference list

- 1.: mould
- 2.: optical element
- 3.: mould part
- 4.: cavity
- 5.: shade-forming section
- 6.: shade
- 7.: insert
- 8.: reflector-forming section
- 9.: PCB holder-forming section
- 10.: lens-forming section
- 11.: lens holder-forming section
- 12.: PCB
- 13.: LED
- 14.: PCB holder
- 15.: lens holder
- 16.: lens
- 17.: reflector

## Claims

1. Mould (1) for injection moulding of an optical element (2) for a headlight, the mould (1) comprising at least two mutually movable mould parts (3) which together delimit a cavity (4) for forming the optical element (2), **characterized in that** the cavity (4) comprises a shade-forming section (5) for moulding a cut-off line shade (6) on the optical element (2), wherein the mould (1) further comprises at least one exchangeable insert (7) for limiting the shade-forming section (5) according to a required cut-off line shape, wherein the insert (7) is at least partially insertable into the shade-forming section (5).

2. The mould (1) according to claim 1 **wherein** the mould (1) comprises a total of at least two exchangeable inserts (7) for limiting the shade-forming section (5), wherein each of the inserts (7) is at least partially insertable into the shade-forming section (5), and each insert (7) has a different shape for moulding a differently shaped cut-off line shade (6).

3. The mould (1) according to any preceding claim **wherein** the cavity (4) further comprises a reflector-forming section (8).

4. The mould (1) according to any preceding claim **wherein** the cavity (4) further comprises a PCB holder-forming section (9).

5. The mould (1) according to any preceding claim **wherein** the cavity (4) further comprises a lens-forming section (10).

6. The mould (1) according to any preceding claim **wherein** the cavity (4) further comprises a lens holder-forming section (11).

7. Method for forming an optical element (2) for a headlight using a mould (1) **characterized in that** it comprises the steps of:
• obtaining a mould (1) insert (7) having a shape corresponding to a required cut-off line shape;
• Inserting the selected insert (7), at least partially, into a shade-forming section (5) of a cavity (4) for forming the optical element (2) of the mould (1);
• Filling the cavity (4) of the mould (1), at least partially, with molten material, wherein a part the material is shaped by the insert (7); and
• Removing the material from the mould (1) after cooling.

8. The method according to claim 7 **wherein** the step of obtaining the mould (1) insert (7) comprises selecting the mould (1) insert (7) from a plurality of inserts (7) which have different shapes for forming differently shaped cut-off line shades (6).

9. The method according to claim 7 **wherein** the step of obtaining the mould (1) insert (7) comprises forming the mould (1) insert (7) according to a requirement for a cut-off line shape.
